Europäisches Patentamt

European Patent Office

Office européen des brevets

(11) Numéro de publication: **0 332 535**
**A1**

## (12) DEMANDE DE BREVET EUROPEEN

(21) Numéro de dépôt: **89400648.5**

(22) Date de dépôt: **08.03.89**

(51) Int. Cl.⁴: **H 02 B 1/04**

(30) Priorité: **09.03.88 FR 8803049**

(43) Date de publication de la demande:
**13.09.89 Bulletin 89/37**

(84) Etats contractants désignés:
**AT BE CH DE ES FR GB GR IT LI NL SE**

(71) Demandeur: **ABB PETERCEM S.A.**
**10, Rue Ampère**
**F-69680 Chassieu (FR)**

(72) Inventeur: **Cellier, Christian**
**43, Rue Neuve Pusignan**
**F-69330 Meyzieu (FR)**

(74) Mandataire: **Laget, Jean-Loup et al**
**Cabinet Pierre Loyer 77, rue Boissière**
**F-75116 Paris (FR)**

(54) **Dispositif d'accrochage d'un contacteur sur l'un de deux types de profilés de largeurs différentes.**

(57) Dispositif permettant l'acrochage d'un appareil indifféremment sur des profilés-supports en forme de chapeau de deux ou plusieurs largeurs.

L'appareil est à crochet 4 et verrou 5 pour son acrochage sur un premier profilé 2.

Le socle 3 de l'appareil porte un deuxième crochet fixe 8, et le verrou 5 porte un deuxième crochet déplaçable 9, pour l'accrochage de l'appareil sur un deuxième profilé 7 de largeur différente de celle du premier profilé 2, dans le cas où il est prévu pour être accroché indifféremment sur deux profilés.

Fig. 1

EP 0 332 535 A1

**Description**

## DISPOSITIF D'ACCROCHAGE D'UN APPAREIL SUR L'UN DE DEUX OU PLUSIEURS PROFILES-SUPPORT DE LARGEURS DIFFERENTES

L'invention concerne un dispositif d'accrochage d'un appareil, tel par exemple un contacteur, sur l'un de deux ou plusieurs profilés-supports, à section normale en forme de chapeau, de largeurs différentes.

Il est usuel, dans les tableaux ou les armoires électriques, d'accrocher les appareils, par exemple les contacteurs, sur des profilés normalisés. Ces profilés-supports peuvent être de différentes sections normales, les plus utilisés étant en forme de chapeau et de différentes largeurs. Pour les petits appareils, on utilise en général le profilé à section en forme de chapeau de largeur 35 dont les bords d'accrochage sont distants de 35mm; et pour les appareils plus gros, on utilise le profilé de section en forme de chapeau de 75 dont les bords d'accrochage sont distants de 75mm. Les appareils sont construits pour être fixés sur un profilé d'une largeur déterminée. Dans un tableau électrique ou une armoire électrique, on trouve des profilés-supports de 35 mm, ou des profilés-supports de 75 mm et parfois les deux. Chaque type de profilé reçoit les appareils qui lui sont destinés. Si l'armoire ou le tableau ne comprend que des profilés type de profilé, elle nécessite des pièces d'adaptation et un temps de montage plus long.

Le problème se pose en particulier pour les appareils qui se trouvent être les plus gros dans la gamme des petits appareils, et qui sont utilisés à la limite des équipements en gros et en petit matériel. Habituellement, les petits contacteurs par exemple, sont construits pour être montés sur des profilés-supports de 35 mm. Leur socle comporte un crochet fixe venant s'accrocher sur l'un des bords du profilé, et une crochet déplaçable porté par un verrou coulissant, venant s'accrocher sur l'autre bord du profilé. Le profilé-support, dit en forme de chapeau, est à section en U avec les ailes du U repliées vers l'extérieur, parallèlement au fond du U. C'est sur les deux rabats des ailes que viennent s'accrocher respectivement le crochet fixe et le crochet déplaçable. Le verrou est coulissant dans le plan des rabats et il est sollicité vers le profilé par une ressort. Pour mettre en place le contacteur, on applique le crochet fixe du dispositif d'accrochage sur le bord d'un rabat du profilé, on pousse ensuite le contacteur par pivotement vers le profilé, ce qui a pour but de comprimer le ressort du verrou, déplaçant ainsi le crochet mobile suffisamment pour le faire passer par-dessus le bord de l'autre rabat du profilé; après cette opération, le ressort du verrou se détendant, le crochet mobile revient se bloquer sur le rabat du profilé, assurant ainsi l'encliquetage du contacteur sur le profilé.

L'un des buts de l'invention est de permettre l'accrochage d'un contacteur sur l'un de deux ou plusieurs porfilés-supports de largeurs différentes, par exemple sur un profilé de 35 mm ou sur un profilé de 75 mm.

Un autre but de l'invention est de prévoir le dispositif d'accrochage pour montage sur l'un quelconque de ces profilés sans adjonction de pièce(s) supplémentaire(s).

L'invention a pour objet un dispositif d'accrochage d'un appareil électrique sur l'un de deux ou plusieurs profilés-supports en forme de chapeau de largeurs différentes, l'appareil étant à crochet et verrou pour son accrochage sur l'un des profilés-supports d'une largeur déterminée et présentant un deuxième crochet fixe, caractérisé en ce que le verrou comporte un deuxième crochet déplaçable espacé du deuxième crochet fixe d'une distance correspondant à la largeur de l'autre type de profilé de façon à assurer l'accrochage de l'appareil indifféremment sur l'un ou l'autre profilé-support.

Selon d'autres caractéristiques de l'invention, le deuxième crochet fixe est décalé par rapport au premier sur le socle de l'appareil, et le deuxième crochet déplaçable est symétriquement décalé par rapport au premier sur le verrou.

A titre d'exemple, on a représenté au dessin annexé :

Fig. 1 - une vue simplifiée d'un appareil, ici un contacteur susceptible d'être accroché indifféremment sur deux types de profilés.

Figure 2 - une vue analogue à celle de la figure 1, montrant la position des crochets mobiles dans l'exemple de réalisation d'un contacteur selon la figure 3.

Figure 3 - une vue de dessous d'un contacteur muni du dispositif d'accrochage selon l'invention.

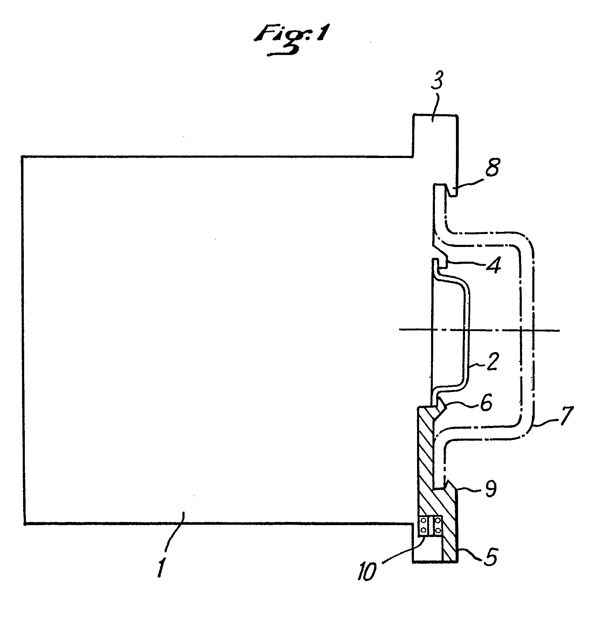

En se reportant à la figure 1, on voit un contacteur 1 prévu pour être accroché à un profilé-support 2 de 35mm. A cet effet, le socle 3 du contacteur présente un premier crochet fixe 4, et le verrou 5 coulissant dans l'axe du socle 3 présente un premier crochet déplaçable 6.

Selon l'invention, ce contacteur est prévu pour être aussi accroché sur un profilé-support de 75mm tel que celui représenté en trait interrompu en 7. A cet effet, le socle 3 présente un deuxième crochet fixe 8 décalé par rapport au premier crochet 4, et le verrou 5 présente un deuxième crochet déplaçable 9, symétriquement décalé par rapport au premier crochet 6.

Ces décalages symétriques sont nécessaires pour conserver au contacteur une position équilibrée par rapport au profilé-support.

On voit que le ressort 10 assure l'appui du verrou sur le profilé-support (2 ou 7) et donc le maintien du contacteur sur le profilé-support.

Pour la mise en place du contacteur, on applique le crochet fixe (4 ou 8) sur le bord du profilé-support (2 ou 7) et on appuie sur le contacteur. Le crochet déplaçable 6 ou 9 présente une rampe inclinée et la pression exercée sur le contacteur provoque le retrait du verrou 5 et l'encliquetage du contacteur sur le profilé-support. Sous la pression du ressort 10, le verrou 5 reprend sa position de verrouillage assurant ainsi le maintien du contacteur sur le profilé-support. Sans aucune pièce nouvelle, on peut ainsi accrocher un contacteur indifféremment sur l'un ou l'autre de deux types de profilés-supports de largeurs différentes.

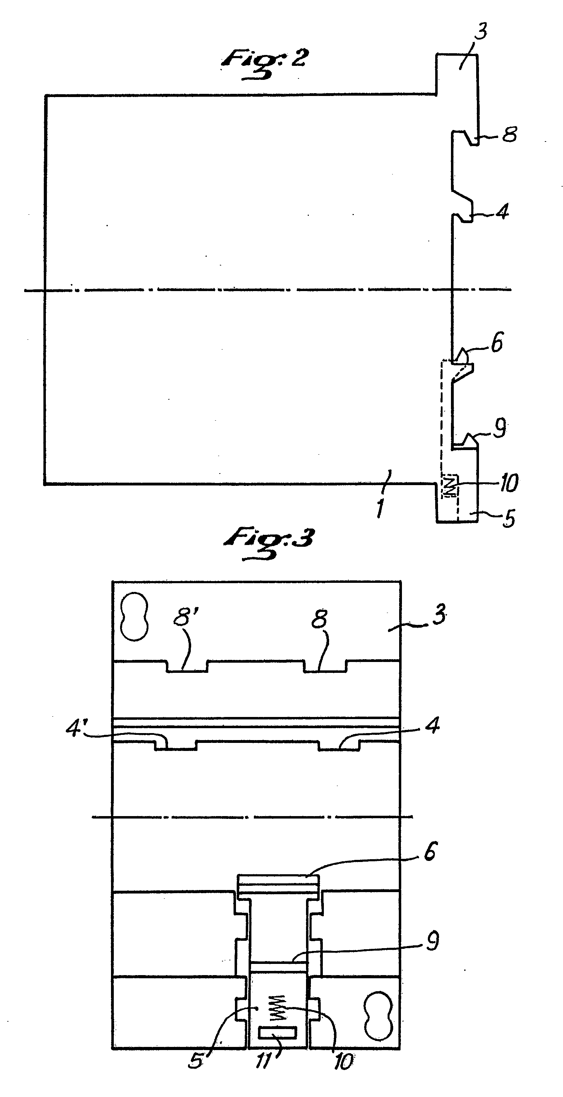

Sur les figures 2 et 3, on voit un exemple de réalisation d'un contacteur assez large, présentant sur sa face inférieure un verrou 5 coulissant dans le plan du socle 3 du contacteur 1. Les crochets fixes sont au nombre de deux pour chaque profilé-support. Les crochets 8 et 8' correspondent au profilé-support de grande largeur, les crochets 4 et 4' au profilé-support de petite largeur. Ils sont écartés l'un de l'autre pour donner de la stabilité au contacteur.

Le verrou 5 coulissant est muni de ses deux crochets déplaçables 6, 9. Ce verrou est placé sensiblement dans l'axe de symétrie longitudinal du socle du contacteur, alors que les crochets fixes 8, 8' d'une part et 4, 4' d'autre part, sont sensiblement symétriques par rapport à cet axe. De cette façon, le contacteur est maintenu sur le profilé-support par trois points disposés en triangle, ce qui assure sa stabilité.

Le verrou 5 présente près de son bord extérieur, une lumière 11 susceptible de recevoir la pointe d'un outil tel qu'un tournevis par exemple. A l'aide de cet outil, on peut exercer une traction vers l'extérieur sur le verrou, en comprimant le ressort symbolisé en 10. De cette manière, on peut rramener les crochets déplaçables 6, 9 en arrière et dégager le contacteur du profilé-support.

L'exemple de réalisation décrit correspond à un appareil électrique susceptible d'être accroché indifféremment sur deux profilés-supports de largeurs différentes. Le même type d'appareil peut être prévu pour son accrochage sur, par exemple, trois profilés-supports normalisés de largeurs différentes. Dans un tel cas on peut prévoir trois crochets fixes sur le socle et trois crochets déplaçables disposés sur le verrou, chaque paire de crochets correspondant à une largeur de profilé-support. On peut également prévoir deux crochets fixes et deux crochets déplaçables, une paire de crochets correspondant à la largeur la plus faible et l'autre à la largeur la plus grande des profilés-supports, la largeur intermédiaire de profilé-support correspondant alors à l'espace compris entre le corchet fixe du profilé-support correspondant alors à l'espace compris entre le crochet fixe du profilé-support à grande largeur et le crochet déplaçable du profilé-support de faible largeur, ou inversement.

Ce qui a été décrit à titre d'exemple pour un contacteur, s'applique à tout appareillage électrique. Il va de soi que selon l'invention, l'un ou l'autre type de profilé et leur nombre est indifférent.


## Revendications

1. Dispositif d'accrochage d'un appareil électrique sur l'un de deux ou plusieurs profilés-support en forme de chapeau de largeurs différentes, l'appareil étant à crochet et verrou pour son accrochage sur l'un des profilés-supports d'une largeur déterminée et présentant un deuxième crochet fixe, caractérisé en ce que le verrou (5) comporte un deuxième crochet déplaçable (9, 6) espacé du deuxième crochet fixe (8, 4) d'une distance correspondant à la largeur de l'autre type de profilé (7, 2) de façon à assurer l'accrochage de l'appareil (1) indifféremment sur l'un ou l'autre profilé-support (2, 7).

2. Dispositif selon la revendication 1, caractérisé en ce que le deuxième crochet fixe (8, 4) est décalé par rapport au premier (4, 8) sur le socle (3) de l'appareil (1), et le deuxième crochet déplaçable (9, 6) est symétriquement décalé par rapport au premier (6, 9) sur le verrou (5).

EP 0 332 535 A1

Fig.1

*Fig:2*

*Fig:3*

# RAPPORT DE RECHERCHE EUROPEENNE

Numero de la demande

EP    89 40 0648

## DOCUMENTS CONSIDERES COMME PERTINENTS ,

| Catégorie | Citation du document avec indication, en cas de besoin, des parties pertinentes | Revendication concernée | CLASSEMENT DE LA DEMANDE (Int. Cl.4 ) |
|---|---|---|---|
| Y | DE-U-7138518 (HERMANN KLEINHUIS)<br>* revendication 1; figure 1 *<br>--- | 1,2 | H02B1/04 |
| Y | FR-A-2259268 (LEGRAND)<br>* page 6, ligne 2 - page 7, ligne 11; figures 4B, 6 *<br>--- | 1,2 | |
| A | FR-A-2144965 (C.G.E.E)<br>* page 2, ligne 2 - ligne 4; figure 3 *<br>----- | 1,2 | |

DOMAINES TECHNIQUES RECHERCHES (Int. Cl.4 )

H02B
H01R

Le présent rapport a été établi pour toutes les revendications

| Lieu de la recherche | Date d'achèvement de la recherche | Examinateur |
|---|---|---|
| LA HAYE | 10 MAI 1989 | WOODALL C.G. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P0402)